# EUROPEAN PATENT APPLICATION

(11) **EP 4 579 223 A1**
(43) Date of publication of application: **02.07.2025**
(21) Application number: 22956410.9
(22) Date of filing: 22.08.2022
(51) Int. Cl.: G01N 21/88

(54) **DAMAGE INFORMATION DETECTION SYSTEM, DAMAGE INFORMATION DETECTION METHOD, AND DAMAGE INFORMATION DETECTION PROGRAM**

(71) Applicant: Cognivision Inc., Tokyo, 163-6024 (JP)
(72) Inventor: SATO Masakazu, Tokyo 163-6024 (JP); NOZAWA Mitsuaki, Tokyo 163-6024 (JP); FURUKAWA Satoshi, Tokyo 163-6024 (JP); MURAKAMI Kazutaka, Tokyo 163-6024 (JP); MORI Naoya, Tokyo 163-6024 (JP)
(74) Representative: J A Kemp LLP
(86) International application number: PCT/JP2022/031573
(87) International publication number: WO 2024/042582

(57) **Abstract**

A damage information detection system as an example of the present disclosure comprises: a feature amount extractor configured to extract a feature amount from a vehicle image in which a vehicle is captured; a damaged area detector configured to detect a damaged area where damage is present in the vehicle based on the feature amount; a damage depth detector configured to detect relative depth of the damage to a case where the damage is not present based on the feature amount; and a damage characteristic detector configured to detect a characteristic of the damage based on the feature amount, the damaged area, and the relative depth.

## Description

### Technical Field

The present disclosure relates to a damage information detection system, a damage information detection method, and a damage information detection program.

### Background Art

Conventionally, there has been known a technique for allowing a user to determine the extent of damage to a vehicle in order to, for example, estimate the cost of repairing an accident vehicle.

### Citation List

### Patent Literature

Patent Literature 1: Japanese Patent Laid-Open No. 2021-124759

### Summary of Invention

### Technical Problem

However, in order to, for example, automate the estimation of the cost of repairing an accident vehicle, it is desirable to detect information regarding the damage to the vehicle in more detail without human intervention.

One of the problems that the present disclosure aims to solve is to provide a damage information detection system, a damage information detection method, and a damage information detection program that are capable of detecting information regarding the damage to a vehicle in more detail without human intervention.

### Solution to Problem

A damage information detection system as an example of the present disclosure comprises: a feature amount extractor configured to extract a feature amount from a vehicle image in which a vehicle is captured; a damaged area detector configured to detect a damaged area where damage is present in the vehicle based on the feature amount; a damage depth detector configured to detect relative depth of the damage to a case where the damage is not present based on the feature amount; and a damage characteristic detector configured to detect a characteristic of the damage based on the feature amount, the damaged area, and the relative depth.

Further, a damage information detection method as another example of the present disclosure comprises: extracting a feature amount from a vehicle image in which a vehicle is captured; detecting a damaged area where damage is present in the vehicle based on the feature amount; detecting relative depth of the damage to a case where the damage is not present based on the feature amount; and detecting a characteristic of the damage based on the feature amount, the damaged area, and the relative depth.

Further, a damage information detection program as yet another example of the present disclosure is for causing a computer to execute: extracting a feature amount from a vehicle image in which a vehicle is captured; detecting a damaged area where damage is present in the vehicle based on the feature amount; detecting relative depth of the damage to a case where the damage is not present based on the feature amount; and detecting a characteristic of the damage based on the feature amount, the damaged area, and the relative depth.

### Brief Description of Drawings

[Figure 1] Figure 1 is an exemplary schematic block diagram showing a functional configuration of a damage information detection system according to an embodiment.
[Figure 2] Figure 2 is an exemplary schematic diagram showing an example of a vehicle image according to the embodiment.
[Figure 3] Figure 3 is an exemplary schematic diagram for illustrating detection results of the ranges of exterior components according to the embodiment.
[Figure 4] Figure 4 is an exemplary schematic diagram for illustrating a detection result of a damaged area according to the embodiment.
[Figure 5] Figure 5 is an exemplary schematic diagram for illustrating a detection result of damage depth according to the embodiment.
[Figure 6] Figure 6 is an exemplary schematic flowchart showing a flow of processing executed by the damage information detection system according to the embodiment.
[Figure 7] Figure 7 is an exemplary schematic block diagram showing a hardware configuration of a computer constituting the damage information detection system according to the embodiment.

### Description of Embodiments

Hereinafter, an embodiment of the present disclosure will be described with reference to the drawings. The configuration of the embodiment described below and the actions and effects brought about by the configuration are merely examples and are not limited to the contents described below.

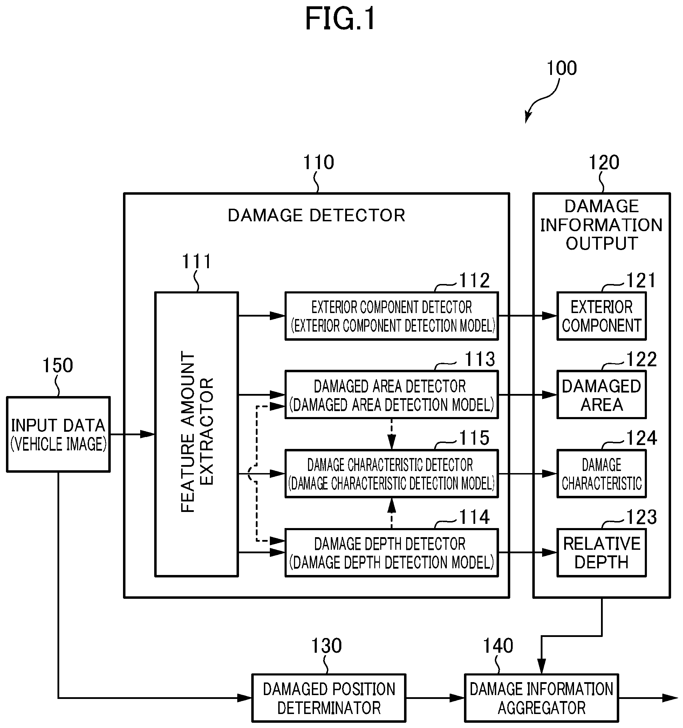

Figure 1 is an exemplary schematic block diagram showing a functional configuration of a damage information detection system 100 according to an embodiment.

As shown in Figure 1, the damage information detection system 100 according to the embodiment includes a damage detector 110, a damage information output 120, a damaged position determinator 130, and a damage information aggregator 140. The damage detector 110 receives a vehicle image in which a vehicle is captured as input data 150, and detects the damage state of the vehicle from the vehicle image. Then, the damage information output 120 outputs image data indicating the damage state of the vehicle based on the detection result from the damage detector 110.

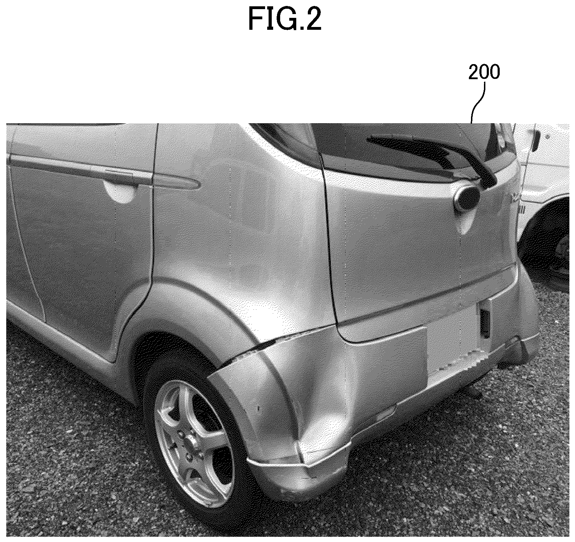

Here, a vehicle image is, for example, an image as shown in the next figure, Figure 2.

Figure 2 is an illustrative schematic diagram showing an example of a vehicle image according to the embodiment.

An image 200 shown in Figure 2 is an example of a vehicle image. In the example shown in Figure 2, by way of example, a vehicle having damage (a dent) in its rear bumper is captured in the image 200. A technique of the embodiment is a technique for detecting such information regarding a dent without human intervention in order to, for example, automate the estimation of the cost of repairing an accident vehicle. Note that in addition to a general RGB image, an RGBD image or the like can also be used as a vehicle image.

Returning to Figure 1, the damage detector 110 includes a feature amount extractor 111, an exterior component detector 112, a damaged area detector 113, a damage depth detector 114, and a damage characteristic detector 115.

The feature amount extractor 111 extracts a feature amount from a vehicle image serving as the input data 150. The feature amount extractor 111 is composed of a feature amount extraction model trained by machine learning so as to output a feature amount of a vehicle image in response to input of the vehicle image. The feature amount extraction model can be implemented using conventionally known techniques, such as Convolutional Neural Networks (CNNs), Feature Pyramid Networks (FPNs), and self-attention.

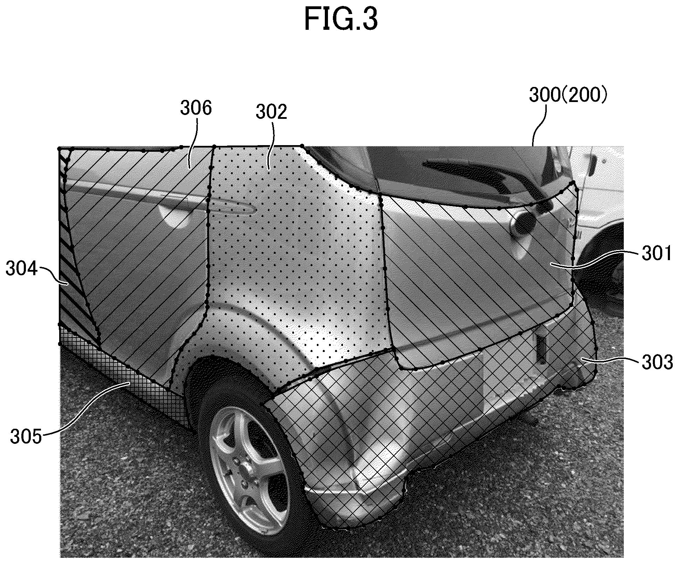

The exterior component detector 112 detects the range of an exterior component of the vehicle captured in the vehicle image such as an outer panel based on the feature amount extracted by the feature amount extractor 111. Note that in addition to an outer panel, exterior components may also include windows, lights, tires, wheels, and the like. The exterior component detector 112 is composed of an exterior component detection model trained by machine learning so as to output the range of an exterior component of a vehicle captured in a vehicle image in response to input of the feature amount of the vehicle image. The exterior component detection model is created in advance by, for example, preparing training data by collecting sample data indicating the correspondence between a vehicle image as input and the range of an exterior component as output, and performing supervised learning or semi-supervised learning using conventionally known techniques such as semantic segmentation and instance segmentation in conjunction with feature amount extraction. The ranges of exterior components are detected, for example, as shown in the next figure, Figure 3.

Figure 3 is an exemplary schematic diagram for illustrating detection results of the ranges of exterior components according to the embodiment.

An image 300 shown in Figure 3 is an example in which detection results of the ranges of exterior components are superimposed on the image 200 shown in Figure 2. In the example shown in Figure 3, an area 301 corresponds to a detection result of the range of the back door panel, which is one of the exterior components, an area 302 corresponds to a detection result of the range of the left rear quarter panel, which is one of the exterior components, and an area 303 corresponds to a detection result of the range of the rear bumper, which is one of the exterior components. Further, an area 304 corresponds to a detection result of the range of the left front door, which is one of the exterior components, an area 305 corresponds to a detection result of the range of the left rocker panel, which is one of the exterior components, and an area 306 corresponds to a detection result of the range of the left rear door, which is one of the exterior components.

Returning to Figure 1, the damaged area detector 113 detects a damaged area where damage is present in the vehicle based on the feature amount extracted by the feature amount extractor 111. At this time, information indicating the type of damage (e.g., a dent, a crack, etc.) may also be detected. Note that the damaged area detector 113 can detect a damaged area more precisely based on more information by also using information detected by the damage depth detector 114 described later (a detection result and/or an intermediate result on the way to the detection result) for detection of the damaged area.

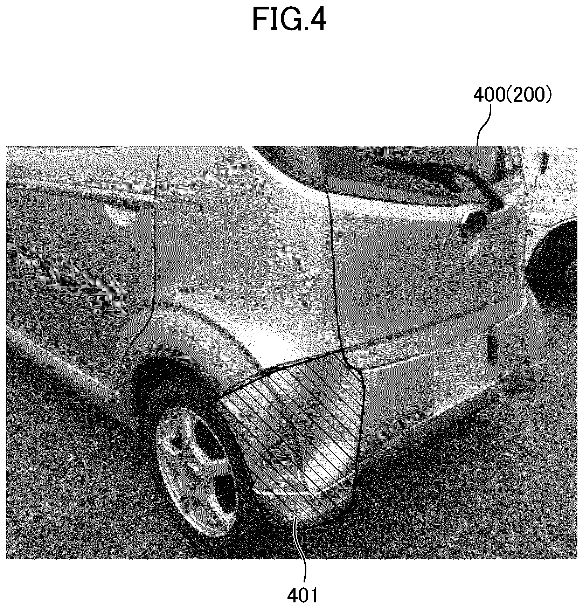

The damaged area detector 113 is composed of a damaged area detection model trained by machine learning so as to output a damaged area (and the type of damage) of the vehicle captured in the vehicle image in response to input of the feature amount of the vehicle image. The damaged area detection model is created in advance by, for example, preparing training data by collecting sample data indicating the correspondence between a vehicle image as input and a damaged area as output, and performing supervised learning or semi-supervised learning using conventionally known techniques such as semantic segmentation and instance segmentation in conjunction with feature amount extraction. A damaged area is detected, for example, as shown in the next figure, Figure 4.

Figure 4 is an exemplary schematic diagram for illustrating a detection result of a damaged area according to the embodiment.

An image 400 shown in Figure 4 is an example in which a detection result of a damaged area is superimposed on the image 200 shown in Figure 2. In the example shown in Figure 4, an area 401 corresponds to a detection result of a damaged area where damage (a dent in the rear bumper) is present.

Returning to Figure 1, the damage depth detector 114 detects relative depth of damage to the case where damage is not present based on the feature amount extracted by the feature amount extractor 111. Relative depth is a concept different from absolute depth from the viewpoint of the camera that captured the vehicle image. The damage depth detector 114 can detect relative depth more precisely based on more information by also using information detected by the damaged area detector 113 described above (a detection result and/or an intermediate result on the way to the detection result) for detection of the relative depth.

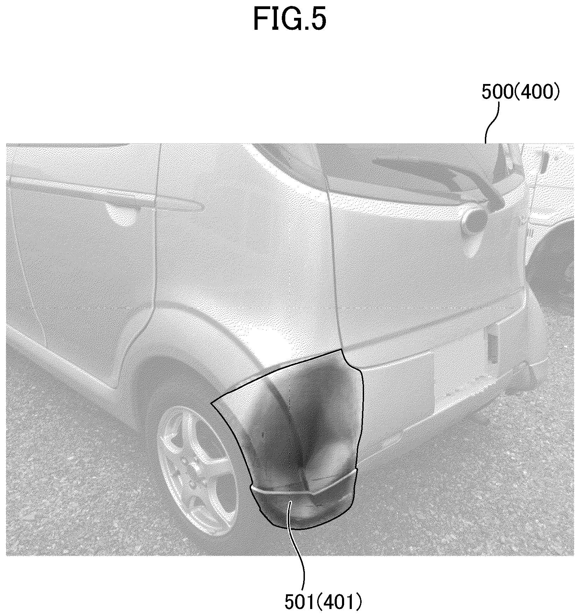

More specifically, the damage depth detector 114 detects a distribution of the relative depth of the damage in the damaged area. Further, the damage depth detector 114 is composed of a damage depth detection model trained by machine learning so as to output (a distribution of) the relative depth of the damaged area of the vehicle captured in the vehicle image in response to input of the feature amount of the vehicle image. The damage depth detection model is created in advance by, for example, preparing training data by collecting sample data indicating the correspondence between a vehicle image as input and relative depth as output, and performing supervised learning or semi-supervised learning using conventionally known techniques such as pixel-wise classification and regression in conjunction with feature amount extraction. Damage depth is detected, for example, as shown in the next figure, Figure 5.

Figure 5 is an exemplary schematic diagram for illustrating a detection result of relative depth according to the embodiment.

An image 500 shown in Figure 5 is an example in which a detection result of the distribution of relative depth is superimposed on the area 401 indicating the damaged area in the image 400 shown in Figure 4. In the example shown in Figure 5, an area 501 to which gradation is applied corresponds to the detection result of the distribution of relative depth. The level of the gradation applied to the area 501 varies according to the degree of relative depth. Note that for better visibility of the area 501, the brightness of the image 500 shown in Figure 5 is adjusted from the image 400 shown in Figure 4.

Returning to Figure 1, the damage characteristic detector 115 detects the characteristics of the damage based on the feature amount extracted by the feature amount extractor 111. The damage characteristic detector 115 can detect the characteristics of the damage more precisely based on more information by further using a detection result of at least one of the damaged area detected by the damaged area detector 113 and the relative depth detected by the damage depth detector 114 and/or an intermediate result on the way to the detection result. The characteristics of damage may include information that is visible on the exterior of the vehicle like characteristics that are directly linked to the decision to replace an exterior component such as cracks or breakages, as well as information that is not visible on the exterior of the vehicle.

For example, in a resin bumper, elastic deformation that is not directly visible on the exterior may occur. In this case, damage may occur to components behind the resin bumper. It goes without saying that repair is often required for damage that is directly visible on the exterior, but repair may also be required for such damage that is not directly visible on the exterior (damage to components behind the bumper). Therefore, in the embodiment, virtual depth that indicates the degree of elastic deformation can be detected as information regarding damage caused by elastic deformation that is not directly visible on the exterior. Note that the expression virtual "depth" corresponds to relative "depth" as information regarding damage that is visible on the exterior.

More specifically, the damage characteristic detector 115 is composed of a damage characteristic detection model trained by machine learning so as to output the characteristics of the damage to the vehicle captured in the vehicle image in response to input of the feature amount of the vehicle image, the damaged area, and the relative depth. The damage characteristic detection model is created in advance by, for example, preparing training data by collecting data indicating the correspondence between a vehicle image as input and the characteristics of damage as output, and performing supervised learning or semi-supervised learning using conventionally known techniques such as CNNs and neural networks based on fully connected layers in conjunction with feature amount extraction.

Here, the damage information detection system 100 according to the embodiment is provided with the following components so that the above-described various detection results can be appropriately used for, for example, estimating the cost of repairing an accident vehicle.

The damaged position determinator 130 receives the vehicle image in which the vehicle is captured as the input data 150, and determines the absolute position of the damage with respect to the body of the vehicle based on the vehicle image. For example, the damaged position determinator 130 determines the absolute position of the damage on the vehicle by aligning the vehicle image with each of a plurality of template images prepared in advance so as to show the vehicle viewed from directions different from each other. Note that the template images are two-dimensional or three-dimensional images that are prepared in advance for each vehicle model. Further, the alignment is performed using a method that utilizes, for example, an algorithm for aligning images using SIFT (Scale-Invariant Feature Transform) or the like, image-to-image mapping via three-dimensional information based on three-dimensional restoration processing of images, or estimation of a two-dimensional homography transformation matrix using a machine learning model.

Further, the damage information aggregator 140 aggregates the detection results from the exterior component detector 112, the damaged area detector 113, the damage depth detector 114, and the damage characteristic detector 115 on a template image in which the absolute position of the damage is determined by the damaged position determinator 130. For example, when there are a plurality of detection results from the exterior component detector 112, the damaged area detector 113, the damage depth detector 114, and the damage characteristic detector 115 (e.g., when there are a plurality of vehicle images as input, or when there are a plurality of detection results as output for one vehicle image), the damage information aggregator 140 weights each of the detection results based on the detection accuracy and then aggregates them on the template image. The weighting may take into consideration, for example, the size or shooting angle of the original vehicle image in addition to the detection accuracy. Note that the damage information aggregator 140 outputs the aggregated information to, for example, an estimation system (not shown) that automatically estimates the cost of repairing an accident vehicle. In this case, the aggregation of information by the damage information aggregator 140 contributes to improving the precision of estimation by the estimation system (not shown).

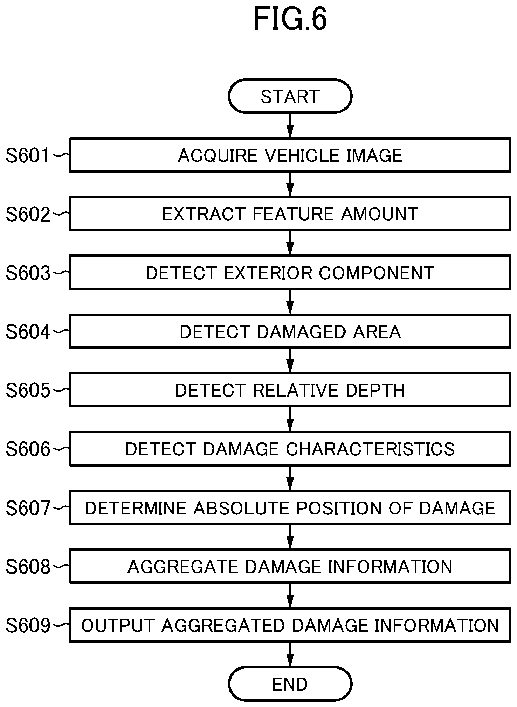

Based on the above configuration, the damage information detection system 100 according to the embodiment executes the processing in the flow shown in the next figure, Figure 6.

Figure 6 is an exemplary schematic flowchart showing a flow of processing executed by the damage information detection system 100 according to the embodiment.

As shown in Figure 6, in this embodiment, the feature amount extractor 111 first acquires a vehicle image in step S601.

Then, in step S602, the feature amount extractor 111 extracts a feature amount of the vehicle image acquired in step S601.

Then, in step S603, the exterior component detector 112 detects the range of an exterior component of a vehicle captured in the vehicle image based on the feature amount extracted in step S602.

Then, in step S604, the damaged area detector 113 detects a damaged area of the vehicle captured in the vehicle image based on the feature amount extracted in step S602.

Then, in step S605, the damage depth detector 114 detects relative depth of damage to the vehicle captured in the vehicle image based on the feature amount extracted in step S602.

Then, in step S606, the damage characteristic detector 115 detects characteristics of the damage to the vehicle captured in the vehicle image based on the feature amount extracted in step S602, in coordination with the detection of the damaged area in step S604 and the detection of the relative depth in step S605.

Then, in step S607, the damaged position determinator 130 determines the absolute position of the damage with respect to the body of the vehicle by aligning the vehicle image with a template image described above.

Then, in step S608, the damage information aggregator 140 weights the detection results in steps S603 to S606 based on the detection accuracy, and then aggregates them on the template image in step S607.

Then, in step S609, the damage information aggregator 140 outputs the aggregated information to, for example, an estimation system (not shown) that automatically estimates the cost of repairing an accident vehicle. Then, the process ends.

Note that in the example shown in Figure 6, the processes in steps S603 to S609 are executed sequentially, but these processes may be executed concurrently as a multitask while sharing the results of the processes (including intermediate results obtained during the processes) with each other. In this case, since various types of information are detected based on a larger amount of highly correlated information, the detection precision can be improved.

As described above, the damage information detection system 100 according to the embodiment includes the feature amount extractor 111, the exterior component detector 112, the damaged area detector 113, the damage depth detector 114, and the damage characteristic detector 115. The feature amount extractor 111 extracts a feature amount from a vehicle image in which a vehicle is captured. The exterior component detector 112 detects the range of an exterior component of the vehicle captured in the vehicle image based on the feature amount. The damaged area detector 113 detects a damaged area where damage is present in the vehicle based on the feature amount. The damage depth detector 114 detects relative depth of the damage to the case where damage is not present based on the feature amount. The damage characteristic detector 115 detects characteristics of the damage based on the feature amount, the damaged area, and the relative depth. With such a configuration, it is possible to detect information regarding damage to a vehicle in more detail without human intervention. Further, since the relative depth corresponds to a dent relative to the original vehicle body, it is also possible to measure the degree of impact on components behind the exterior component caused by the dent on the vehicle body by using the relative depth. This makes it possible to more accurately detect components that need repair, for example, when estimating the cost of repairing an accident vehicle.

Further, in the embodiment, the damage depth detector 114 detects the distribution of relative depth of damage in the damaged area. With such a configuration, for example, unlike the case where only the relative depth at one point is detected, it is possible to detect information regarding the damage in more detail.

Further, the damage information detection system 100 according to the embodiment further includes the damage information output 120 that maps and outputs the range of the exterior component, the damaged area, the relative depth, and the characteristics of the damage onto a predetermined template image corresponding to the vehicle. With such a configuration, it is possible to identify and analyze the components and range of the vehicle affected by the damage based on the damaged position on the template image.

Further, in the embodiment, the feature amount extractor 111 is composed of the feature amount extraction model trained by machine learning so as to output a feature amount in response to input of a vehicle image. Further, the exterior component detector 112, the damaged area detector 113, and the damage depth detector 114 are composed of the exterior component detection model, the damaged area detection model, and the damage depth detection model, respectively, that are trained by machine learning so as to output the range of the exterior component, the damaged area, and the relative depth, respectively, in response to input of the feature amount. Further, the damage characteristic detector 115 is composed of the damage characteristic detection model trained by machine learning so as to output characteristics of the damage in response to input of the feature amount. With such a configuration, it is possible to detect information regarding damage to a vehicle in more detail using various models trained through machine learning.

Note that in the embodiment, the characteristics of the damage include virtual depth that indicates the degree of deformation of an elastic member in the case where the damage corresponds to deformation of the elastic member that is not visible on the exterior. With such a configuration, it is possible to detect information regarding damage that is not visible on the exterior as an index of virtual depth.

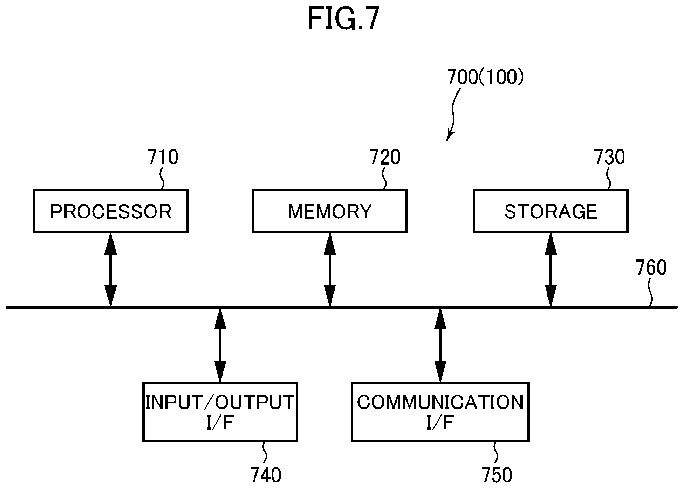

Finally, a hardware configuration of an information processing device constituting the damage information detection system 100 (see Figure 1) according to the above-described embodiment will be described. The damage information detection system 100 according to the embodiment is configured to include a computer 700 having a hardware configuration as shown in the next figure, Figure 7.

Figure 7 is an exemplary schematic block diagram showing a hardware configuration of the computer 700 constituting the damage information detection system 100 according to the embodiment.

As shown in Figure 7, the computer 700 includes a processor 710, a memory 720, a storage 730, an input/output interface (I/F) 740, and a communication interface (I/F) 750. These pieces of hardware are connected to a bus 760.

The processor 710 is composed of, for example, a CPU (Central Processing Unit) and/or a GPU (Graphics Processing Unit), and controls various processes executed in the computer 700.

The memory 720 includes, for example, a read only memory (ROM) and a random access memory (RAM), and enables volatile or non-volatile storage of various data such as programs executed by the processor 710, provision of a working area for the processor 710 to execute the programs, and the like.

The storage 730 includes, for example, a hard disk drive (HDD) or a solid state drive (SSD), and stores various data in a non-volatile manner.

The input/output interface 740 controls the input of data from input devices (not shown) such as a keyboard and a mouse to the computer 700, and the output of data from the computer 700 to output devices (not shown) such as a display and speakers.

The communication interface 750 enables the computer 700 to communicate with other devices.

The functional configuration of the damage information detection system 100 according to the embodiment (see Figure 1) is implemented as a group of functional modules through cooperation between hardware and software as a result of the processor 710 executing a damage information detection program stored in advance in the memory 720 or the storage 730. However, in the embodiment, some or all of a group of the functional modules shown in Figure 7 may be implemented solely by hardware such as specially designed circuitry.

Note that the above-described damage information detection program need not necessarily be stored in advance in the memory 720 or the storage 730. For example, the above-described damage information detection program may be provided as a computer program product recorded in an installable or executable format on a computer-readable medium, for example, various magnetic disks such as a flexible disk (FD) or various optical disks such as a DVD (Digital Versatile Disk).

Further, the above-described damage information detection program may be provided or distributed via a network such as the Internet. That is, the above-described damage information detection program may be provided in a state where it is stored on a computer connected to a network such as the Internet and is downloadable via the network.

Furthermore, the functional configuration of the damage information detection system 100 according to the embodiment (see Figure 1) may be implemented on a computer network such as the Internet by using cloud computing.

Although the embodiments of the present disclosure have been described above, these embodiments have been presented as examples and are not intended to limit the scope of the invention. These novel embodiments can be embodied in various other forms, and various omissions, substitutions, and modifications can be made without departing from the spirit of the invention. These embodiments and their variations are included in the scope and spirit of the invention, and are included in the scope of the inventions described in Claims and their equivalents.

### Reference Signs List

- 100: damage information detection system

- 111: feature amount extractor
- 112: exterior component detector
- 113: damaged area detector
- 114: damage depth detector
- 115: damage characteristic detector
- 120: damage information output
- 130: damaged position determinator
- 140: damage information aggregator

## Claims

1. A damage information detection system comprising:
a feature amount extractor configured to extract a feature amount from a vehicle image in which a vehicle is captured;
a damaged area detector configured to detect a damaged area where damage is present in the vehicle based on the feature amount;
a damage depth detector configured to detect relative depth of the damage to a case where the damage is not present based on the feature amount; and
a damage characteristic detector configured to detect a characteristic of the damage based on the feature amount, the damaged area, and the relative depth.

2. The damage information detection system according to claim 1, further comprising
an exterior component detector configured to detect a range of an exterior component of the vehicle captured in the vehicle image based on the feature amount.

3. The damage information detection system according to claim 1, wherein
the damage depth detector is configured to detect a distribution of the relative depth of the damage in the damaged area.

4. The damage information detection system according to claim 1, further comprising
a damaged position determinator configured to determine an absolute position of the damage with respect to a body of the vehicle based on the vehicle image.

5. The damage information detection system according to claim 4, wherein
the damaged position determinator is configured to determine the absolute position of the damage on the vehicle by aligning the vehicle image with each of a plurality of template images prepared in advance so as to show the vehicle viewed from directions different from each other.

6. The damage information detection system according to claim 5, further comprising
an exterior component detector configured to detect a range of an exterior component of the vehicle captured in the vehicle image based on the feature amount,
wherein the damaged position determinator is configured to determine the absolute position of the damage using the template images together with detection results from the exterior component detector, the damaged area detector, the damage depth detector, and the damage characteristic detector.

7. The damage information detection system according to claim 5, further comprising
a damage information aggregator configured to, when there are a plurality of detection results from the damaged area detector, the damage depth detector, and the damage characteristic detector, weight each of the detection results based on detection accuracy and then aggregate the weighted detection results on the template images.

8. The damage information detection system according to claim 2, wherein
the feature amount extractor includes a feature amount extraction model trained by machine learning so as to output the feature amount in response to input of the vehicle image,
the exterior component detector, the damaged area detector, and the damage depth detector include an exterior component detection model, a damaged area detection model, and a damage depth detection model, respectively, that are trained by machine learning so as to output the range of the exterior component, the damaged area, and the relative depth, respectively, in response to input of the feature amount, and
the damage characteristic detector includes a damage characteristic detection model trained by machine learning so as to output the characteristic of the damage in response to input of the feature amount, the damaged area, and the relative depth.

9. The damage information detection system according to claim 1, wherein
the characteristic of the damage includes virtual depth that indicates a degree of deformation of an elastic member when the damage corresponds to deformation of the elastic member that is not visible on an exterior.

10. A damage information detection method comprising:
extracting a feature amount from a vehicle image in which a vehicle is captured;
detecting a damaged area where damage is present in the vehicle based on the feature amount;
detecting relative depth of the damage to a case where the damage is not present based on the feature amount; and
detecting a characteristic of the damage based on the feature amount, the damaged area, and the relative depth.

11. The damage information detection method according to claim 10, further comprising
detecting a range of an exterior component of the vehicle captured in the vehicle image based on the feature amount.

12. The damage information detection method according to claim 10, further comprising
determining an absolute position of the damage with respect to a body of the vehicle based on the vehicle image.

13. The damage information detection method according to claim 12, wherein
the determining includes determining the absolute position of the damage on the vehicle by aligning the vehicle image with each of a plurality of template images prepared in advance so as to show the vehicle viewed from directions different from each other.

14. The damage information detection method according to claim 13, further comprising
detecting a range of an exterior component of the vehicle captured in the vehicle image based on the feature amount,
wherein the determining includes determining the absolute position of the damage using the template images together with detection results of the range of the exterior component, the damaged area, the relative depth of the damage, and the characteristic of the damage.

15. The damage information detection method according to claim 13, further comprising
when there are a plurality of detection results of the damaged area, the relative depth of the damage, and the characteristic of the damage, weighting each of the detection results based on detection accuracy and then aggregating the weighted detection results on the template images.

16. A damage information detection program for causing a computer to execute:
extracting a feature amount from a vehicle image in which a vehicle is captured;
detecting a damaged area where damage is present in the vehicle based on the feature amount;
detecting relative depth of the damage to a case where the damage is not present based on the feature amount; and
detecting a characteristic of the damage based on the feature amount, the damaged area, and the relative depth.

17. The damage information detection program according to claim 16, for causing the computer to further execute
detecting a range of an exterior component of the vehicle captured in the vehicle image based on the feature amount.

18. The damage information detection program according to claim 16, for causing the computer to further execute
determining an absolute position of the damage with respect to a body of the vehicle based on the vehicle image.

19. The damage information detection program according to claim 18, wherein
the determining includes determining the absolute position of the damage on the vehicle by aligning the vehicle image with each of a plurality of template images prepared in advance so as to show the vehicle viewed from directions different from each other.

20. The damage information detection program according to claim 19, for causing the computer to further execute
detecting a range of an exterior component of the vehicle captured in the vehicle image based on the feature amount,
wherein the determining includes determining the absolute position of the damage using the template images together with detection results of the range of the exterior component, the damaged area, the relative depth of the damage, and the characteristic of the damage.

21. The damage information detection program according to claim 19, for causing the computer to further execute
when there are a plurality of detection results of the damaged area, the relative depth of the damage, and the characteristic of the damage, weighting each of the detection results based on detection accuracy and then aggregating the weighted detection results on the template images.
